# EUROPEAN PATENT APPLICATION

(11) **EP 3 235 651 A1**
(43) Date of publication of application: **25.10.2017**
(21) Application number: 16305452.1
(22) Date of filing: 20.04.2016
(51) Int. Cl.: B41M 5/00, B42D 25/40

(54) **METHOD FOR MANUFACTURING A PRINTED IDENTIFICATION CARD COMPRISING A MAGNETIC STRIPE**

(71) Applicant: GEMALTO SA, 92190 Meudon (FR)
(72) Inventor: KARAFOTIS, Stéphane, 92190 MEUDON (FR); GOURDEN, Yannick, 92190 MEUDON (FR)
(74) Representative: Cassagne, Philippe M.J.

(57) **Abstract**

The present invention relates to a method (MTH) for manufacturing a printed identification card (IC) from a support (SP) which comprises at least one core (C) of an identification card (IC), wherein said method (MTH) comprises:
- printing by means of a first printing unit (PU1) an image (11) on said core (C) ;
- collating by means of a collating unit (CU) an overlay (Ov) on said printed core (C), said overlay (Ov) comprising a magnetic stripe (M) ;
- printing by means of a digital printing unit (PU2) an image (12) on said magnetic stripe (M) using multicromy colors inks (1k);
- laminating by means of a lamination unit (LU) said overlay (Ov) with said core (C).

## Description

### TECHNICAL FIELD

The present invention relates to a method for manufacturing a printed identification card from a support which comprises at least one core of an identification card. It also relates to an equipment which is adapted to carry out said method.

Such method may be used in a non-limitative example within the domain of identification card manufacturing machines.

### BACKGROUND OF THE INVENTION

In the domain of printed identification cards manufacturing, a manufacturing process, well-known by the man skilled in the art, uses two sheets, for example PVC sheets, from which a plurality of identification cards with a final format will be cut. Said two sheets correspond respectively to the front and to the back of the core of said plurality of identification cards. After printing the two sheets, an overlay with the magnetic stripes of the future plurality of identification cards is put on the "back" sheet and an overlay without magnetic stripes is put on the "front" sheet.
Afterwards, the magnetic stripes are printed with a silkscreen printing process.
Then, the two sheets are laminated, and the plurality of identification cards is cut out from the two sheets according to said final format.

One problem of this prior art is that the silkscreen printing step permits to print only one color on a magnetic stripe. Indeed, said silkscreen printing process uses one color which is applied on a mask, said mask being the negative of a predetermined image to be printed on said magnetic stripes.

If another color is printed on the magnetic stripes with another silkscreen printing step before the lamination step, there will be a problem of color registration which will lead to an improper image compared to the original desired image.

### SUMMARY OF THE INVENTION

It is an object of the invention to provide a method for manufacturing a printed identification card from a support which comprises at least one core of an identification card, which permits to print any kind of image on said magnetic stripe, said image comprising one or a plurality of colors.

To this end, there is provided a method for manufacturing a printed identification card from a support which comprises at least one core of an identification card, wherein said method comprises:
- printing by means of a first printing unit an image on said core;
- collating by means of a collating unit an overlay on said printed core, said overlay comprising a magnetic stripe;
- printing by means of a digital printing unit an image on said magnetic stripe using multicromy colors inks;
- laminating by means of a lamination unit said overlay with said core.

According to non-limitative embodiments of the invention, the method in accordance with the invention further comprises the following characteristics.

In a non-limitative embodiment, said digital printing unit is:
- an inkjet printing machine; or
- a laser printing machine; or
- a photo-electromagnetic printing machine.

In a non-limitative embodiment, said method further comprises pre-sticking by means of said collating unit the overlay with a glue to said core after collating said overlay.

In a non-limitative embodiment, said method further comprises:
- applying by means of said digital printing unit a primer on said magnetic stripe before printing said magnetic stripe; and/or
- applying by means of said digital printing unit a varnish on said magnetic stripe after printing said magnetic stripe; and/or
- applying by means of said digital printing unit an additional UV invisible security ink on said magnetic stripe after printing said magnetic stripe.

In a non-limitative embodiment, said support is:
- a sheet comprising a plurality of cores of identification cards; or
- slightly greater than a final format of the core of the identification card; or
- equal to a final format of the core of the identification card.

In a non-limitative embodiment, said final format is an ID-1, ID-2 or ID-3 format.

In a non-limitative embodiment, said method further comprises drying by means of said digital printing unit said printed magnetic stripe.

In a non-limitative embodiment, said method further comprises punching the core into a final format after the lamination.

In a non-limitative embodiment, said method further comprises an electrical personalization by means of a personalization unit of said magnetic stripe after laminating said overlay with said core.

In a non-limitative embodiment, the multicromy colors inks comprise a dynamic viscosity between 15 to 50 mPa.s at 25°C.

In a non-limitative embodiment, the first printing unit is:
- a digital printing unit; or
- an offset printing unit; or
- a silkscreen printing unit.

In a non-limitative embodiment, the identification card is a smart card.

In a non-limitative embodiment, the identification card is a banking card.

In addition, there is provided an equipment for manufacturing a printed identification card from a support which comprises at least one core of an identification card, wherein said equipment comprises:
- a first printing unit for printing an image on said core;
- a collating unit for collating an overlay on said printed core, said overlay comprising a magnetic stripe;
- a digital printing unit for printing an image on said magnetic stripe using multicromy colors inks;
- a lamination unit for laminating said overlay with said core.

In a non-limitative embodiment, said digital printing unit comprises:
- at least one printing head adapted to apply the multicromy colors inks on said magnetic stripe for printing said magnetic stripe.

In a non-limitative embodiment, said digital printing unit further comprises:
- at least one printing head adapted to apply a primer on said magnetic stripe before printing said magnetic stripe;
- at least one printing head adapted to apply a varnish on said magnetic stripe after printing said magnetic stripe;
- at least one printing head adapted to apply an additional UV invisible security ink on said magnetic stripe after printing said magnetic stripe.

In addition, there is provided an identification card comprising a core, wherein said identification card comprises a magnetic stripe on said core, said magnetic stripe comprising an image which is printed with multicromy colors inks.

### BRIEF DESCRIPTION OF THE FIGURES

Some embodiments of methods and/or apparatus in accordance with embodiments of the present invention are now described, by way of example only, and with reference to the accompanying drawings, in which:
- Fig. 1 illustrates an organization chart of the method, according to a non-limitative embodiment of the invention, for manufacturing a printed identification card, said identification card comprising a core;
- Fig. 2 illustrates schematically an identification card which is manufactured according to said method of Fig. 1; and
- Fig. 3 illustrates schematically a non-limitative embodiment of an equipment which is adapted to manufacture a printed identification card according to the method of Fig. 1.

### DESCRIPTION OF EMBODIMENTS OF THE INVENTION

In the following description, well-known functions or constructions by the man skilled in the art are not described in detail since they would obscure the invention in unnecessary detail.

The present invention relates to a method MTH for manufacturing a printed identification card IC from a support SP which comprises at least one core C of an identification card IC.

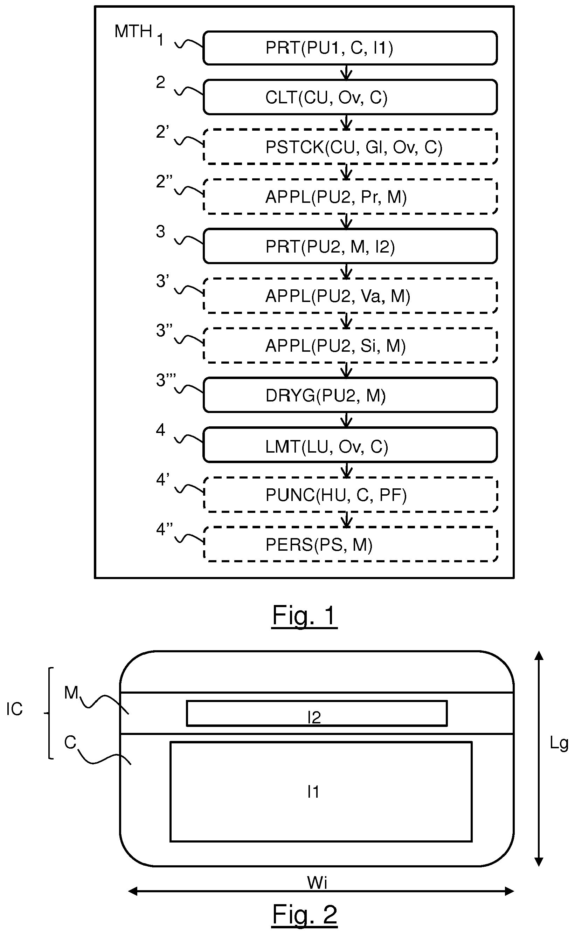

Said method MTH is illustrated in Fig. 1.

The method MTH comprises:
- printing by means of a first printing unit PU1 an image I1 on said core C (step illustrated in Fig. 1 (PRT(PU1, C, I1));
- collating by means of a collating unit CU an overlay Ov on said printed core C (step illustrated in Fig. 1 (CLT(CU, Ov, C)), said overlay Ov comprising a magnetic stripe M;
- printing by means of a digital printing unit PU2 an image I2 on said magnetic stripe M (step illustrated in Fig. 1 (PRT(PU2, M, I2)) using multicromy colors inks Ik;
- laminating by means of a lamination unit LU said overlay Ov with said core C (step illustrated in Fig. 1 (LMT(LU, Ov, C)).

The printed identification card IC which is manufactured by said method MTH is illustrated in Fig. 2.

In a first non-limitative embodiment, the support SP is a sheet S which comprises a plurality of cores C of identification cards IC. That is to say, from this sheet S, a plurality of cores C may be cut-out. Thus a plurality of printed identification cards IC may be manufactured from this sheet S.

In a second non-limitative embodiment, the support SP is slightly greater than a final format PF of the core C of the identification card IC.
That is to say, from said support SP, only one core C of an identification card IC may be cut-out. That is to say, after the lamination of the identification card IC, said support SP is cut-out in a final format PF of the core C. In a non-limitative example of said second embodiment, the support SP is of a size of 99 x 70 mm, has a thickness of 0.76 mm (0.030 in), and rounded corners.

In a third non-limitative embodiment, the support SP is equal to a final format PF of the core C of the identification card IC. That is to say, there is no need to cut-out this support SP, as this support SP is the core C of one identification card IC in its final format PF.

In non-limitative embodiments, the final format PF comprises:
- a flatness lower or equal to 40µm.
- a thickness between 300µm and 1000µm.
- a length Lg up to 99mm.
- a width Wi up to 70mm.
In a non-limitative variant, said final format PF is an ID-1 format as described in the standard ISO/CEI 7810. It is to be reminded that the ID-1 format specifies a size of 85.60 x 53.98 mm (3.370 x 2.125 in) and a thickness of 0.76 mm (0.030 in), and rounded corners.

The final format PF of the identification card IC used may vary depending on the customer request. Thus, it might be a banking card format, a SIM card format, a micro SIM card format, or any other type of special format that may be requested by a customer.

In non-limitative embodiments, said identification card IC is a banking smart card, a SIM ("Subscriber Identity Module") card or USIM ("Universal Subscriber Identity Module") card, a driving license, a passport, or a fidelity card etc.

In a non-limitative embodiment, said identification card IC is a smart card. A smart card comprises a secure element which is adapted to perform cryptographic operations and store a secret.

In non-limitative embodiments, the core C of the identification card IC is a:
- PVC core (polyvinyl chloride); and/or
- PET core (polyethylene terephthalate); and/or
- PLA core (polylactic acid); and/or
- PC core (polycarbonate); and/or
- PET-G core (polyethylene terephthalate glycol-modified); and/or
- ABS core (acrylonitrile butadiene styrene).

In non-limitative embodiments, the core C of the identification card IC is opaque or transparent.
In a non-limitative embodiment, the identification card IC comprises an integrated antenna for contactless or dual interface (contact and contactless).

In a non-limitative embodiment, the magnetic stripe M comprises magnetic particles which are adapted to be polarized. A magnetic stripe M being well-known by the man skilled in the art, it is not described here.

In non-limitative embodiments, an image I1, I2 comprises a color background and/or a logo, and/or an artwork, and/or a photo, and/or a plurality of characters forming a text, etc.
It is to be noted that an image I1, I2 may comprise one or a plurality of colors.

In a non-limitative embodiment illustrated in Fig. 1, the method MTH further comprises drying by means of said digital printing unit PU2 said printed magnetic stripe M (step illustrated in Fig. 1 DRYG(PU2, M)).

In non-limitative embodiments illustrated in Fig. 1 in dotted-lines, the method MTH further comprises:
- pre-sticking by means of said collating unit CU the overlay Ov with a glue GI to said core C after collating said overlay Ov (step illustrated in Fig. 1 in dotted lines PSTCK(CU, GI, Ov, C));
- applying by means of said digital printing unit PU2 a primer Pr on said magnetic stripe M before printing said magnetic stripe M (step illustrated in Fig. 1 in dotted lines APPL(PU2, Pr, M));
- applying by means of said digital printing unit PU2 a varnish Va on said magnetic stripe M after printing said magnetic stripe M (step illustrated in Fig. 1 in dotted lines APPL(PU2, Va, M));
- applying by means of said digital printing unit PU2 an additional UV invisible security ink Si on said magnetic stripe M after printing said magnetic stripe M (step illustrated in Fig. 1 in dotted lines APPL(PU2, Si, M)).

In a non-limitative embodiment illustrated in Fig. 1 in dotted-lines, the method MTH further comprises punching the core(s) C of said identification card(s) IC into a final format PF after the lamination (step illustrated in Fig. 1 in dotted lines PUNC(HU, C, PF). When the support SP is slightly greater than the final format PF, only one core C is cut-out. When the support SP is a sheet S, a plurality of cores are cut-out.

In a non-limitative embodiment illustrated in Fig. 1 in dotted-lines, the method MTH further comprises an electrical personalization by means of a personalization unit PS of said magnetic stripe M after laminating said overlay Ov with said core C (step illustrated in Fig. 1 in dotted lines PERS(PS, M)).

The steps of the method MTH are described in more details in the following. Said method MTH comprises the non-limitative embodiments above-cited.

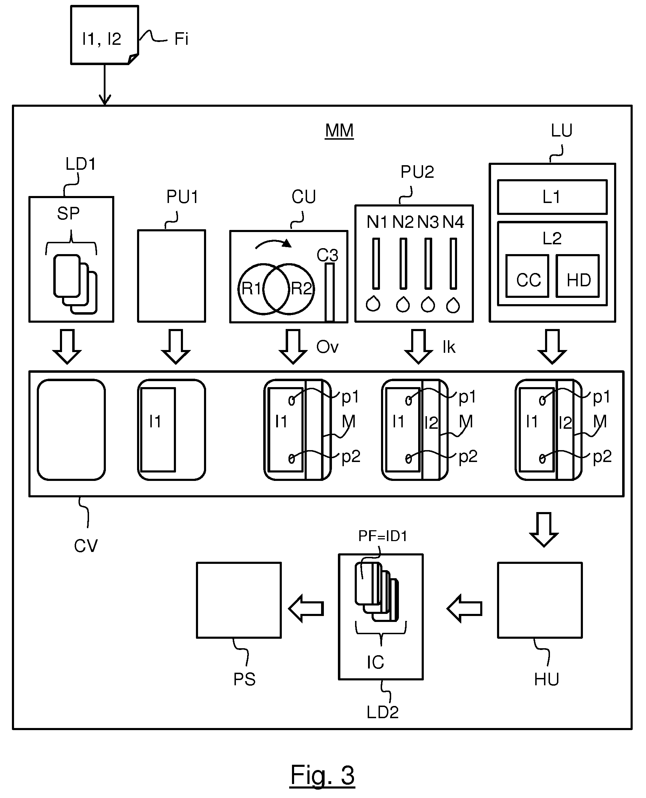

In the non-limitative embodiment illustrated in Fig. 1 and Fig. 3, the support SP to which the method MTH will be applied is slightly greater than the final format PF, and in the non-limitative illustrated example, the final format PF is the ID-1 format.

The support SP which comprises one core C of an identification card IC is loaded by a loader LD1 (illustrated in Fig. 3) onto a conveyor CV (illustrated in Fig. 3) and is conveyed to the first printing unit PU1.

Hence, **in step 1),** the first printing unit PU1 prints an image I1 on the core C of said identification card IC.

In non-limitative embodiments, the first printing is:
- a digital printing; and/or
- an offset printing; and/or
- a silkscreen printing.

It is to be noted that when the first printing uses an offset printing combined with a silkscreen printing, in a non-limitative embodiment, there is first a silkscreen printing, then an offset printing, and afterwards another silkscreen printing.

It is to be noted that when a digital printing is performed for said core C, a same printing unit may be used for printing the core C and the magnetic stripe M, which permits to reduce the units used and therefore the cost of the whole equipment MM (described later) which manufactures the printed identification cards.

The offset printing and the silkscreen printing being well-known by the man skilled of the art, they are not described here.

**In step 2),** the collating unit CU collates an overlay OV on said printed core C, said overlay comprising a magnetic stripe M.
It is to be noted that the core C of the identification card IC comprises two sides, one side being the front of the identification card IC and the other side being the back of the identification card IC.

In a non-limitative embodiment, the overlay Ov is supplied in the form of two rolls of foils, one being disposed on the top of the core C (front), and the other one at the bottom of the core C (back).
The foils are cut by the collating unit CU at the format of the support SP. Hence, the overlay Ov covers the whole core C of said identification card IC. The overlay Ov permits to add the magnetic stripe M on the core C, and is a protective layer which permits to protect the image I1 which has been printed on the core C.
In a non limitative embodiment, the overlay Ov is an adhesive layer of transparent plastic.
In a non limitative embodiment, the thickness of the overlay Ov is substantially equal to 50 µm (micro-meters).
It is to be noted that the collating permits to weld the foils of the overlay Ov with two weld points p1, p2 (illustrated in Fig. 3) on each side of the core C of the identification card IC.

In order to ensure that the overlay Ov is well-stuck to the core C, in a non-limitative **step 2'**), the collating unit CU pre-sticks the overlay Ov with a glue GI to said core C after collating said overlay Ov.

Before the step 3) described hereinafter, in a non-limitative **step 2"**), the digital printing unit PU2 further applies a primer Pr on said magnetic stripe M. It permits the multicromy colors inks Ik to adhere very-well to the magnetic stripe M. Furthermore, it permits to control the arrangement of the multicromy colors inks drops so that they may mix up well.
In a non-limitative embodiment, a primer Pr is composed of acrylates based UV. It permits the multicromy colors inks Ik used in the digital printing to better resist some quality tests.

In a non-limitative embodiment, the primer Pr is applied on said magnetic stripe M only where multicromy colors inks Ik will be applied, that is to say, only on the spots of the magnetic stripe M which will be printed. Hence, the magnetic stripe M comprises a surface which is not totally covered with said primer Pr. The lesser there are some layers on the magnetic stripe M, the better the electrical personalization and the reading of said magnetic stripe M are.

**In step 3),** the digital printing unit PU2 prints an image I2 on said magnetic stripe M using multicromy colors inks Ik.

It is to be noted that usually, the image I2 printed on the magnetic stripe M is different from the image I1 printed on the core C. But they may be the same. Thanks to the use of multicromy colors inks Ik, the image I2 may be multicolor. Of course said image I2 may comprises only one color if asked by the customer.

In non-limitative variants of embodiment, the multicromy colors inks Ik are CMYK (Cyan, Magenta, Yellow, and Black) inks Ik or CMYK Orange Blue inks Ik. It permits to have any type of colors within the image I2 printed on the magnetic stripe M.

In non-limitative variants of embodiment, the multicromy colors inks Ik further comprise a white color.

In non-limitative embodiments, the multicromy colors inks Ik are:
- UV inks (Ultra-Violet). In this case, in non-limitative variants, the multicromy colors inks Ik are based on acrylates;
- water based inks. In this case, in non-limitative variants, the multicromy colors inks Ik are based on vinyls;
- solvent based inks. In this case, in non-limitative variants, the multicromy colors inks Ik are based on vinyls.

In a non-limitative embodiment, the multicromy colors inks Ik comprise a dynamic viscosity between 15 to 50 mPa.s (milli-Pascal-second) at 25°C (Celsius). It permits to have some multicromy colors inks Ik less viscous than those used with an offset printing process or a silkscreen printing process, so that said multicromy colors inks Ik may easily flow through the nozzles of the digital printing unit PU2.

It is to be noted that the multicromy colors inks Ik used are characterized so that they:
- are compatible with the standard of the customer which orders the identification cards production. For example, with the banking smart card standard, the orange ink will be compatible with the orange of MASTERCARD®, referenced Pantone PMS485, or with the blue ink with VISA®, referenced Pantone PMS137.
- do not adhere the lamination plate of the lamination unit LU (described later) during the lamination step;
- support height bending stress, so that there are no visual defect after such height bending stress;
- support dynamic bending stress, so that there is a minimum deflection after said dynamic bending stress;
- do not shift after the lamination step.
Hence, the multicromy colors inks Ik used are characterized according to the International standard ISO/IEC 7810 « Identification cards - Physical characteristics ».

In a non-limitative **step 3'**), the digital printing unit PU2 further applies a varnish Va on said magnetic stripe M after printing said magnetic stripe M.
It permits to protect the image I2 which has been printed on said magnetic stripe M.

In a non-limitative embodiment, the varnish Va is applied on said magnetic stripe M only where multicromy colors inks Ik have been applied, that is to say, only on the spots of the magnetic stripe M which have been printed. Hence, the magnetic stripe M comprises a surface which is not totally covered with said varnish Va. The lesser there are some layers on the magnetic stripe M, the better the electrical personalization and the reading of said magnetic stripe M are.

In a non-limitative **step 3"**), the digital printing unit PU2 further applies an additional UV invisible security ink Si on said magnetic stripe M after printing said magnetic stripe M.

This additional layer Si permits to add security means to the identification card IC. Said additional layer is visible under UV and is fluorescent.
Said additional UV invisible security ink Si may be applied to print an image I3 (not illustrated). Said image I3 may therefore be checked under UV when the identification card IC is being used by an owner of said identification card IC.

In a non-limitative **step 3"'),** the digital printing unit PU2 further dry said printed magnetic stripe M.
Hence, the multicromy colors inks Ik are dried before the lamination.
It is to be noted than when the multicromy colors inks Ik are:
- UV inks, they are dried under Ultra-Violets;
- Water base or solvent, they are dried with heat.

**In step 4),** the lamination unit LU laminates said overlay Ov with said core C. The lamination comprises a pressing with heating and cooling.

Firstly, the lamination unit LU presses the identification card IC while heating it so that the overlay Ov is soldered with the core C.
Secondly, the lamination unit LU cools the identification card IC while going on applying a pressure on said identification card IC.

While heating the identification card IC, the lamination step permits to activate the glue GI which is in the overlay Ov so that the overlay Ov is glued to the core C and resist to a delamination stress.
While cooling the identification card IC, the lamination step permits to obtain the finishing on the core C of the identification card IC, such as a mirror finishing or a matt finishing.

It is to be noted that the multicromy colors inks Ik are characterized so that they are not damaged by the lamination step. For example, they are characterized so that they will not stick to the lamination plate of the lamination unit LU or not cracked after the lamination step.

It is to be noted that when the support SP is a sheet S or comprises a size different from the ID-1 format (slightly greater), **in step 4'),** the identification card(s) IC is punched into the final format PF, which is here the format ID-1, by means of a punching unit HU.

**In step 4"),** the magnetic stripe M is electrically personalized by means of a personalization unit PS after laminating said overlay Ov with said core C. It permits to put some information on the magnetic stripe M, such as in non-limitative examples the identification card number, some owner's information, an expiration date etc.
Such electrical personalization being well-known by the man skilled in the art, it won't be described here.

It is to be noted that in a non-limitative embodiment, the method MTH further comprises an embossing step (not illustrated) for performing embossed characters on the core of said identification card IC.

Hence, the method MTH above-described permits to produce the printed identification card IC illustrated in Fig. 2.
As above-described, the identification card IC comprises a core C with a magnetic stripe M, said magnetic stripe M comprising an image I2 which is printed with multicromy colors inks Ik. One or a plurality of colors may be printed on said magnetic stripe M with said multicromy colors inks Ik.

The method MTH which has been described is carried out by an equipment MM for manufacturing a printed identification card IC, said identification card IC comprising a core C, illustrated in Fig. 3.

It is to be noted that the equipment MM, is fed with at least one input file Fi comprising the images I1, and I2 to be printed respectively on the core C and the magnetic stripe M. Said input file Fi is generated by a computer program product which is a graphic computer program product adapted to produce multicolor images I1, I2.

In a non-limitative embodiment, the equipment MM works at a speed of 3000 identification cards per hour.

As illustrated in Fig. 3, the equipment MM comprises:
- a first printing unit PU1 for printing an image I1 on said core C;
- a collating unit CU for collating an overlay Ov on said printed core C, said overlay Ov comprising a magnetic stripe M;
- a digital printing unit PU2 for printing an image I2 on said magnetic stripe M using multicromy colors inks Ik;
- a lamination unit LU for laminating said overlay Ov with said core C.

In non-limitative embodiments the equipment MM further comprises a punching unit HU for punching the core(s) of the identification card(s) IC into its final format PF.

In non-limitative embodiments, the equipment MM further comprises as illustrated in Fig. 3:
- a loader LD1 for loading the support SP on a conveyor CV;
- said conveyor CV for conveying the support SP along the different units PU1, CU, PU2, and LU, HU of said equipment MM, beginning by the first printing unit PU1;
- an unloader LD2 to unload the identification card(s) IC when the manufacturing process ends.

In a non-limitative embodiment, the equipment MM further comprises as illustrated in Fig. 3, a personalization unit PS for electrical personalization of the magnetic stripe M.

The different units may be independent from each other or connected with each other. Hence, in a non-limitative example, the first printing unit PU1 and the digital printing unit PU2, the personalization unit PS are independent from the other units, whereas the loader LD1, the conveyor CV, the collating unit CU, the lamination unit LU, the punching unit HU and the unloader LD2 are mechanically connected with each other.

The different units of the equipment MM are described hereinafter.

### • First printing unit

In non-limitative embodiments, the first printing unit PU1 illustrated in Fig. 3 is:
- a digital printing unit, said digital printing unit being different or the same as the one PU2 which also prints the magnetic stripe M; or
- an offset printing unit; or
- a silkscreen printing unit.

An offset printing unit and a silkscreen printing unit being well-known by the man skilled in the art, it won't be described here.

### • Collating unit

In a non-limitative embodiment, as illustrated in Fig. 3, the collating unit CU comprises two rolls R1, R2 adapted to supply the overlay Ov in the form of two foils, one being disposed on the top of the core C, and the other one at the bottom of the core C.

Hence, more particularly, the collating unit CU is adapted to collate:
- a first foil (also called top overlay) of the overlay Ov on the front of the core C via the first roll R1, said first foil being without any magnetic stripe M; and
- a second foil (also called bottom overlay) of the overlay Ov on the back of the core C via the second roll R2, said second foil being with said magnetic stripe M.

In a first non-limitative embodiment, a foil comprises a thickness of 50µm.

The collating unit CU is further adapted to cut the two foils at the size of the support SP so that the overlay Ov covers the whole core C of said identification card IC. To this end, the collating unit CU comprises a cutter device C3.

### • Digital printing unit

In non-limitative embodiments, said digital printing unit PU2 is:
- an inkjet printing machine; or
- a laser printing machine; or
- a photo-electromagnetic printing machine.

In a non-limitative embodiment, the digital printing unit PU2 comprises at least one printing head N1 illustrated in Fig. 3 for applying the multicromy colors inks Ik on said magnetic stripe M for printing said magnetic stripe M. In a non-limitative embodiment, there is one printing head per color.
One printing head comprises a plurality of nozzles for outputting color drops. The greater the resolution of a printing head is, the greater the number of nozzles is.

Thanks to the multicromy colors inks Ik, the color spectrum for the image I2 printed on the magnetic stripe M increases.

When a primer Pr, a varnish Va, and an additional UV invisible security ink Si are used, in non-limitative embodiments, the digital printing unit PU2 comprises:
- at least one printing head N2 illustrated in Fig. 3 for applying said primer Pr on said magnetic stripe M before printing said magnetic stripe M;
- at least one printing head N3 illustrated in Fig. 3 for applying said varnish Va on said magnetic stripe M after printing said magnetic stripe M;
- at least one printing head N4 illustrated in Fig. 3 for applying said additional UV invisible security ink Si on said magnetic stripe M after printing said magnetic stripe M.

In a non-limitative embodiment, the nozzles of each printing head N1, N2, N3, N4 for applying the multicromy colors inks Ik are interleaved. It means that the nozzles are disposed in ranks parallel which is other, and a rank of nozzles is shifted from another neighbored rank of nozzles. It permits to increase the resolution of a printing head. In a non-limitative example, two printing heads of a resolution of 360dpi which nozzles are interleaved will give a resolution of 720dpi.

In a non-limitative embodiment, the nozzles of the printing heads N1 to N4 produces multicromy colors inks drops which are smaller or equal to 6 pl (picoliter).

When the white color and/or the additional UV invisible security ink Si are used, the digital printing unit PU2 further comprises:
- a printing head (not illustrated) for applying said white color on said magnetic stripe M;
- a printing head (not illustrated) for applying said additional UV invisible security ink Si on said magnetic stripe M.

It is to be noted that the particles of the white color are bigger than those of the other colors. Therefore, in a non-limitative embodiment, the nozzles of the white color printing head produces multicromy colors inks drops which are smaller or equal to 42pl (picoliter).

In a first non-limitative embodiment, the digital printing unit PU2 is a flat bed printing unit. It permits to make a multi-passes print on said identification card IC.
The flatbed printed unit comprises printing heads which are adapted to go back and front.
In this first non-limitative embodiment, the digital printing unit PU2 comprises only one printing head for applying respectively said multicromy colors inks (printing heads N1 to N4), said primer Pr, said varnish Va and said additional UV invisible security ink Si.
In a non-limitative variant of said first embodiment, the digital printing unit PU2 comprises a printing resolution of 1440*720 dpi and the printing heads a resolution of 150 dpi which means that a printing head comprises 150 nozzles per inch, that is to say, 150 multicromy colors inks drops are dropped on each inch of the magnetic stripe M.

In a second non-limitative embodiment, as illustrated in Fig. 3, said digital printing unit PU2 is a single pass printing unit. In a non-limitative variant of said second embodiment, the digital printing unit PU2 comprises a printing resolution of 1440*720 dpi.
In a first non-limitative variant of said second embodiment, the digital printing unit PU2 comprises only one printing head for applying respectively said multicromy colors inks (printing heads N1 to N4), said primer Pr, said varnish Va and said additional UV invisible security ink Si. In this variant, the printing heads comprise a resolution of 350 dpi which means that a printing head comprises 350 nozzles per inch.

In a second non-limitative variant of said second embodiment, the digital printing unit PU2 comprises two printing heads for respectively applying the multicromy colors inks Ik (printing heads N1 to N4), the primer Pr, the varnish Va, and the additional UV invisible security ink Si. In this case, the printing heads comprise a resolution of 720 dpi which means that a printing head comprises 720 nozzles per inch. In a non-limitative embodiment, the nozzles of the two printing heads for applying a same multicromy color ink Ik are interleaved. Hence, one may have interleaved nozzles within one printed head combined with interleaved nozzles between two printing heads of a same color.

### • Lamination unit

In a non-limitative embodiment, as illustrated in Fig. 3, the lamination unit LU comprises:
- at least two lamination plates L1 which are pressed on each face of the identification card IC in order to laminate the overlay Ov with the core C;
- heating and cooling means L2 respectively for heating and cooling the lamination plates L1.

The lamination plates L1 comprises a surface finishing which is transferred to the core C of the identification cards IC during the cooling. The surface finishing is a mirror surface or a matt surface.

In a first non-limitative embodiment, the lamination unit LU comprises only two lamination plates L1.
This first embodiment may be used for laminating a support SP which comprise only one core C of an identification card IC (that is to say which size is of the ID-1 format or slightly greater).

In a non-limitative variant of said first non-limitative embodiment, the heating and cooling means L2 comprises a ceramic device.
In a non-limitative embodiment, said ceramic device cooperates with a heater device HD, such as in a non-limitative example an electrical resistance heater and with a cooling circuit CC, such as in a non-limitative example a refrigerated water circuit.

The lamination plates L1 are designed to come in contact with the identification card IC to laminate.
The lamination plates L1 are adapted to be:
- pressed (by means of two presses not illustrated) onto the identification card IC and transmit the heat diffused by the ceramic device to heat the identification card IC during lamination, thanks to the heating device HD ;
- pressed (by means of two presses not illustrated) onto the identification card IC and transmit the cooling diffused by the ceramic device to cool the identification card IC at the end of lamination, thanks to the cooling circuit CC.

In a non-limitative embodiment, the lamination is performed at a temperature comprised between 100°C to 180°C, when heating the identification card IC.

In a non-limitative example:
- when heating the identification card IC, at a temperature of 130°C, the pressure will be of 80N/cm2 during 24 sec;
- when cooling the identification card IC, at a temperature of 12°C, the pressure will be of 215N/cm2 during 24 sec.

It is to be noted that this first embodiment is faster than the second embodiment described hereinafter.

In a second non-limitative embodiment, the lamination unit LU comprises more than two lamination plates L1.
This second embodiment may be used for laminating a support SP which comprises a plurality of cores C of identification cards IC, that is to say a support SP which is a sheet S.

This second embodiment permits to take in sandwich between the two presses one or a plurality of layers of sheets S plus lamination plates L1, a sheet S being set between two lamination plates L1.
The different lamination plates L1 are designed to come in contact with the sheets to laminate.
The lamination plates L1 are adapted to be:
- pressed (by means of the two presses not illustrated) onto the sheets S and transmit the heat to heat said sheets during lamination, thanks to the heating device HD ;
- pressed (by means of the two presses not illustrated) onto the sheets S and transmit the cooling to cool said sheets at the end of lamination, thanks to the cooling circuit CC.

In a non-limitative example:
- when heating the sheet(s), at a temperature of 135°C, the pressure will be of 105N/cm2 during 20 min;
- when cooling the sheet(s), at a temperature of 17°C, the pressure will be of 205N/cm2 during 20 min.

It is to be noted that the pressure on the support SP is lower during the heating than during the cooling. It avoids the support SP to be too much distorted during the heating.

It is to be noted that the multicromy colors inks Ik used for the printing of the magnetic stripe M are characterized so that they endure such pressures and such temperatures. Hence, they should not crackle.

### • Punching unit

The punching unit HU is adapted to cut-out the core C into the final format PF, which is in the non-limitative illustrated example the ID-1 format.
When the support SP is a sheet S, a plurality of cores C are cut-out into the final format which results in a plurality of identification cards IC.
When the support SP is of a format slightly greater than the final format PF, only one core C is cut-out into the final format PF, which results in one identification card IC.

When the punching ends, an unloader LD2 illustrated in Fig. 3 unloads the identification card IC from the conveyor CV.

### • Personalization unit

The personalization unit PS comprises some magnetic heads which are adapted to polarize the magnetic stripe M in order to create some information on it.
It is to be noted that the personalization unit PS is usually a machine which is different from the other units.
In another non-limitative embodiment, the personalization unit PS is not part of the equipment MM.

It is to be understood that the present invention is not limited to the aforementioned embodiments and variations and modifications may be made without departing from the scope of the invention.
Hence, in non-limitative embodiments, the final format PF is equal to an ID-2 or ID-3 format as described in the standard ISO/CEI 7810.
Hence, in a non-limitative embodiment, the equipment MM may not comprise the personalization unit PS. In this case, the personalization unit PS is an independent machine.

Hence, some embodiments of the invention may comprise one or a plurality of the following advantages:
- it permits to print any kind of multicolor image on the magnetic stripe M of said identification card IC;
- thanks to the digital printing with the multicromy colors inks Ik, it permits to reproduce all the colors which may be used with a silkscreen printing;
- thanks to the digital printing, it reduces the manufacturing cost as the cost for the digital printing is lower than the one for the offset printing cost or for the silkscreen printing when applied on a small number of identification cards IC such as a hundred(s) of identification cards;
- it permits to perform card to card printing. It permits to produce identification cards in few quantity (about a hundred) and answer some customer's requests, when the format of the support SP may be already nearly equal or may be equal to the final format PF2 when being loaded in the equipment;
- contrary to a silkscreen printing, it permits to have an image with colors which comprises no registration issue. Therefore the image printed on the magnetic stripe is not distorted compared to the desired original image.

## Claims

1. Method (MTH) for manufacturing a printed identification card (IC) from a support (SP) which comprises at least one core (C) of an identification card (IC), wherein said method (MTH) comprises:
- printing by means of a first printing unit (PU1) an image (I1) on said core (C);
- collating by means of a collating unit (CU) an overlay (Ov) on said printed core (C), said overlay (Ov) comprising a magnetic stripe (M);
- printing by means of a digital printing unit (PU2) an image (I2) on said magnetic stripe (M) using multicromy colors inks (Ik);
- laminating by means of a lamination unit (LU) said overlay (Ov) with said core (C).

2. Method (MTH) according to claim 1, wherein said digital printing unit (PU2) is:
- an inkjet printing machine; or
- a laser printing machine; or
- a photo-electromagnetic printing machine.

3. Method (MTH) according to claim 1 or claim 2, wherein the multicromy colors inks (Ik) are CMYK or CMYK Orange Blue colors inks.

4. Method (MTH) according to anyone of the previous claims 1 to 3, wherein said method (MTH) further comprises pre-sticking by means of said collating unit (CU) the overlay (Ov) with a glue (GI) to said core (C) after collating said overlay (Ov).

5. Method (MTH) according to anyone of the previous claims 1 to 4, wherein said method (MTH) further comprises:
- applying by means of said digital printing unit (PU2) a primer (Pr) on said magnetic stripe (M) before printing said magnetic stripe (M); and/or
- applying by means of said digital printing unit (PU2) a varnish (Va) on said magnetic stripe (M) after printing said magnetic stripe (M); and/or
- applying by means of said digital printing unit (PU2) an additional UV invisible security ink (Si) on said magnetic stripe (M) after printing said magnetic stripe (M).

6. Method (MTH) according to anyone of the previous claims 1 to 5, wherein said support (SP) is:
- a sheet (S) comprising a plurality of cores (C) of identification cards (IC); or
- slightly greater than a final format (PF) of the core (C) of the identification card (IC); or
- equal to a final format (PF) of the core (C) of the identification card (IC).

7. Method (MTH) according to claim 6, wherein said final format (PF) is an ID-1, ID-2 or ID-3 format.

8. Method (MTH) according to anyone of the previous claims 1 to 7, wherein said method (MTH) further comprises drying by means of said digital printing unit (PU2) said printed magnetic stripe (M).

9. Method (MTH) according to anyone of the previous claims 1 to 8, wherein said method (MTH) further comprises punching the core (C) into a final format (PF) after the lamination.

10. Method (MTH) according to anyone of the previous claims 1 to 9, wherein said method (MTH) further comprises an electrical personalization by means of a personalization unit (PS) of said magnetic stripe (M) after laminating said overlay (Ov) with said core (C).

11. Method (MTH) according to anyone of the previous claims 1 to 10, wherein the multicromy colors inks comprise a dynamic viscosity between 15 to 50 mPa.s at 25°C.

12. Method (MTH) according to anyone of the previous claims 1 to 11, wherein the first printing unit (PU1) is:
- a digital printing unit; or
- an offset printing unit; or
- a silkscreen printing unit.

13. Equipment (MM) for manufacturing a printed identification card (IC) from a support (SP) which comprises at least one core (C) of an identification card (IC), wherein said equipment (MM) comprises:
- a first printing unit (PU1) for printing an image (I1) on said core (C);
- a collating unit (CU) for collating an overlay (Ov) on said printed core (C), said overlay (Ov) comprising a magnetic stripe (M);
- a digital printing unit (PU2) for printing an image (I2) on said magnetic stripe (M) using multicromy colors inks (Ik);
- a lamination unit (LU) for laminating said overlay (Ov) with said core (C).

14. Equipment (MM) according to the previous claim 13, wherein said digital printing unit (PU2) comprises:
- at least one printing head (N1) adapted to apply the multicromy colors inks (Ik) on said magnetic stripe (M) for printing said magnetic stripe (M).

15. Equipment (MM) according to the previous claim 13 or claim 14, wherein said digital printing unit (PU2) further comprises:
- at least one printing head (N2) adapted to apply a primer (Pr) on said magnetic stripe (M) before printing said magnetic stripe (M);
- at least one printing head (N3) adapted to apply a varnish (Va) on said magnetic stripe (M) after printing said magnetic stripe (M);
- at least one printing head (N4) adapted to apply an additional UV invisible security ink (Si) on said magnetic stripe (M) after printing said magnetic stripe (M).

16. Identification card (IC) comprising a core (C), wherein said identification card (IC) comprises a magnetic stripe (M) on said core (C), said magnetic stripe (M) comprising an image (I2) which is printed with multicromy colors inks (Ik).
